# EUROPEAN PATENT SPECIFICATION

(11) **EP 2 509 924 B1**
(45) Date of publication and mention of the grant of the patent: **24.09.2014**
(21) Application number: 10807594.6
(22) Date of filing: 07.12.2010
(51) Int. Cl.: C04B 14/10, C04B 18/02, C04B 28/02, C04B 20/10, C04B 40/06

(54) **SOLIDS COMPOSITION OF CONCRETE OR MORTAR CONTAINING POROUS GRANULES**
FESTSTOFFZUSAMMENSETZUNGEN AUS BETON ODER MÖRTEL MIT PORÖSEM GRANULAT
COMPOSITION DE SOLIDES DESTINÉE À DU BÉTON OU DU MORTIER CONTENANT DES GRANULÉS POREUX

(30) Priority: 07.12.2009 FI 20096294
(43) Date of publication of application: 17.10.2012
(73) Proprietor: Kautar Oy, 37630 Valkeakoski (FI)
(72) Inventor: VIRTANEN, Pentti, FI-37630 Valkeakoski (FI)
(74) Representative: Seppo Laine Oy
(86) International application number: PCT/FI2010/051000
(87) International publication number: WO 2011/070236

(56) References cited:
- EP-A2- 0 437 324
- WO-A1-03/045869
- WO-A1-2007/057510
- WO-A1-2008/068322
- WO-A1-2010/037903
- DATABASE WPI Week 199514 Thomson Scientific, London, GB; AN 1995-101699 XP002637547, & JP 7 025655 A (SHIMIZU CONSTR CO LTD) 27 January 1995 (1995-01-27)

## Description

The present invention relates to the dry matter composition of concrete or mortar that contains granules, and to the concrete or mortar manufactured from such a composition.

The raw materials, manufacturing technique, and logistics of concrete involve a lot of uncertainty factors, which are corrected by so-called safety factors. In addition to these, uncertainties related to the strength of materials, which are mainly the result of external factors, have an impact. These necessitate increases in concrete structures, concrete and the amount of steel.

A commonly used way of making so-called ready-mix concrete is to transport the raw materials to a separate mixing plant and to further transfer the mixed concrete to its application. Problems are created because of the bulky nature of concrete and the resulting inhomogeneity of concrete. The logistics add to this uncertainty concerning the homogeneity of concrete.

WO 03/045869 A1, EP 0437324 A2 and JP 7025655 A all describe mixtures intended for use in concrete or mortar containing particles of inert or pozzolanic nature.

WO 2008/068322 A1 describes particles of calcium carbonate that have been coated with polyacrylic acid.

WO 2007/057510 A1 describes an aqueous suspension including a hydraulic binder as well as particles of precipitated calcium carbonate.

WO 2010/037903 A1 describes a composition comprising granules having hydraulic particles on their surface.

The object of the present invention is to reduce the uncertainty factors and variations in quality related to the manufacture of concrete.

In particular, the object of the present invention is to manufacture a dry matter mixture that is suitable for the manufacture of concrete or mortar and that contains all the different dry substances in correct proportions with each other and attached to each other, which dry matter mixture can simply be mixed with water into a homogeneous mass.

The present invention thus relates to the dry matter composition of concrete or mortar that contains porous core particles, to the surface of which the particles of a hydraulic binder are attached, separate particles of the hydraulic binder, and a dry aggregate, to the surface of which the other constituents of the concrete or mortar are attached.

More precisely, the composition according to the present invention is characterized by what is stated in Claim 1.

The concrete or mortar according to the invention, in turn, is characterized by what is stated in Claim 14.

An advantage of the present invention is that the dry matter composition can be transported directly to the destination of casting by ordinary container equipment and it will not harden prematurely, for example, during transportation. The porous granules included in the invention are capable of binding water, whereby the water that is needed in concrete curing is obtained to the concrete product by means of the same. The method according to the invention also decreases the safety factor. At the same time, the applicability of the manufactured concrete to industrial construction is improved. Furthermore, the use of the porous granule according to the invention minimizes the need of hydraulic binder per cubic metre of concrete. Similarly, the cost-effectiveness is increased by shortening the production times.

These advantages are achieved by manufacturing the concrete from subcomponents that are in correct proportions to each other.

The present invention thus relates to the dry matter composition that is suitable for the manufacture of concrete or mortar and that contains porous core particles, to the surface of which the particles of a hydraulic binder are attached, and of separate particles of the hydraulic binder; the core particles consisting of an inert or pozzolanic material and forming porous granules together with the binder attached thereto; the granules, in turn, being attached to the surface of the dry aggregate.

According to a preferred embodiment of the invention, an adhesive is used to strengthen the attachment of the particles to each other, the adhesive preferably consisting of the nanoparticles of calcium carbonate or polymer particles, and preferably being a combination of carrier particles and polymer particles.

According to a particularly preferred embodiment, the dry matter composition according to the invention contains particles of dry aggregate, on the surfaces of which there are nanoparticles of calcium carbonate (CaCO₃) and granules, the granules, in turn, containing inert or pozzolanic core particles that are coated with the hydraulic binder, the granules being glued to the dry aggregate particles (and the hydraulic binder) with the said adhesive.

### Granules

Said granules are porous, spherical particles, which are formed from the inert or pozzolanic material, which is preferably metakaolin, more preferably in the form of metakaolin particles (MK). The small particles of the hydraulic binder, which typically have sizes less than 3 µm, are attached to the outer surfaces of these metakaolin particles. When necessary, these particles of the hydraulic binder can be treated so that their size distribution becomes sharper than ordinary.

According to a preferred embodiment of the invention, the inert or pozzolanic material is pozzolanic metakaolin, which is formed by agglomerating kaolin and by thereafter calcining at least the outer surfaces of the agglomerates thus formed, and which most preferably is in the form of porous, spherical metakaolin sinter particles (MKS). These MKS particles preferably have sizes of 10 - 100 µm, the main part of which, however, are in the order of 20 - 60 µm. The small particles of the hydraulic binder with a size smaller than 5 µm, however, mainly smaller than 3 µm, especially smaller than 2 µm, are attached to the surface of the MKS by means of condensation water or the said adhesive. At the forming stage, Ca(OH)₂ and a CO₂ gas filler remain in the porous structure of the particles.

In connection with the manufacture, calcium oxide (CaO) and, possibly, sodium oxide (Na₂O), and gas that most suitably is carbon dioxide, helium or air or a combination thereof, generally remain in the pores of the porous granules.

In connection with the manufacture, nanoparticles of calcium carbonate remain in the porous structure of the MKS, which nanoparticles in connection with calcination partly decompose into calcium oxide (CaO) and carbon dioxide (CO₂). The porous structure thus preferably comprises 2 - 20% calcium oxide (CaO) of the total weight of the granule, more preferably 8 - 15%. Correspondingly, the porous structure preferably comprises 0.5 - 5% sodium oxide (Na₂O) of the total weight of the granule, more preferably 1 - 2%, which is similarly formed from sodium hydroxide (NaOH).

CaO forms with water calcium hydroxide (Ca(OH)₂), which further reacts pozzolanically with metakaolin. By means of the Ca(OH)₂ that is produced by the MKS itself and the Ca(OH)₂ that is produced by Portland cement, the pozzolanic reactions suitable for the purpose as well as the amount required by the same are achieved. This can be used to increase the early strength, for example. Sodium oxide (Na₂O), in turn, improves the fire resistance of the composition.

When manufacturing MKS, CO₂ is generated in its porous structure, reacting with Ca(OH)₂, when concrete is being made. From the reaction, nanoparticles of CaCO₃ are formed, which further function as nucleation centres.

The method is used for influencing the ductility of the mixture, which is formed by the hydraulic binder, in mixing and casting the concrete, whereby a hydraulic binder that contains a larger amount of small particles can be used. This can be used for influencing the early strength. Particles of the hydraulic binder larger than 3 µm remain free and their amount in relation to MKS particles is about the same; therefore, the probability distribution in the same space is 50%. The MKS particles also bind water in the composition, whereby the moisture in the composition is distributed more evenly than in known compositions, and the preferable moisture content remains longer in the composition and the concrete or mortar made from the same.

The relation between these two groups of particles (MKS and the hydraulic binder) is stabilized, when they are further attached to the dry aggregate particles.

### Dry aggregate

The dry aggregate used in the invention is preferably limestone, some other stone, silicon dioxide, synthetic dry aggregate or a mixture thereof, most suitably limestone, and it preferably has a particle size of 16 mm at the most, more preferably 0.1 - 16 mm, most suitably 0.3 - 6 mm. The above-mentioned granules and the large particles of >3 µm of the hydraulic binder are attached to the surface of these dry aggregate particles by means of the adhesive. In this way, a paste, that is mortar, suitable for the manufacture of concrete is provided.

### Adhesive

The adhesive in the dry composition preferably comprises this combination:
1. a carrier,
   to which
2. polymers
   are attached.

The carrier preferably comprises nanoparticles of calcium carbonate (CaCO₃), which preferably have particle sizes of 50 - 1000 nm, most preferably 100 - 200 nm. They function for example, as growers (~220000 m²/ concrete m³) of the bursting surface and as nucleation centres in the hydraulic binder stone. They contain 1 - 15%, most preferably 10% of generally useful metallic impurities.

The polymers, in turn, are preferably copolymers, the base polymers of which are polyatomic carboxylic acids with linear shapes, which because of their positive net charges are capable of attaching to carbonates.

According to a preferred embodiment, combination particles are formed from this combination, wherein polymer branches are accumulated around nanoparticles. The combination particles have a coverage area (that is, the diameter of nanoparticle coated with polymer) of about 100 nm - about 1000 nm, preferably about 200 nm - about 400 nm, most suitably about 200 nm. These combination particles form a sticky, dry film between the particles of the dry composition that are to be attached to each other, or between the granule and the particle.

### Hydraulic binder

The hydraulic binder is preferably Portland cement (OPC) or cement that is particularly rich in C2S (dicalcium silicate), most preferably Portland cement. As mentioned above, the particles of the hydraulic binder can be treated, as required, so that their size distribution becomes sharper than the ordinary. Typically, the particle size distribution of Portland cement is quite low and it provides a reasonable castability in ordinary concrete.

Making the size distribution sharper and the resulting improvement of the form factor are carried out so that Portland cement is treated in a pressure roller that crushes part of the large cement particles. This improves the form factor of the particles and increases the amount of small particles by 10 - 15%.

In the method according to the invention, more particles of < 3 µm can be used than in the known technique without an increase in the amount of water.

### Copolymer

According to a preferred embodiment, in addition to the above-mentioned gluing, the invention uses polymer in increasing the coverage areas of the various particles of the granules. These polymers also function as plasticizers and adjusters of the movement of water in so lutions.

The polymers used are preferably copolymers, the base polymer of which has a molecular shape that is a linear and polyvalent carboxylic acid. The molecular weight of the base polymer is preferably 2000 - 4000 g/mol, more preferably about 4000 g/mol, and its degree of polymerization 55. The base polymer is most preferably acrylic acid.

The copolymers are preferably formed using, in addition to the base polymer, polyethylenglycol and maleic acid as monomers. When acrylic acid is used as base polymer, esters of polyacrylic acid and cross-linked acids are thus formed. The monomers and structures in question are:
- Acrylic acid: H₂C = CH · COOH
- Polyethylenglycol: HOCH₂ · (H₂C · O · CH₂)ₙ · CH₂OH
- Maleic acid: HOOCH HC = CH · COOH

The polymerized product thus obtained is acidic. Its pH is within 1.7 - 2.5. For use, the product is neutralized, however, preferably using 20% NaOH to a value of pH 6.

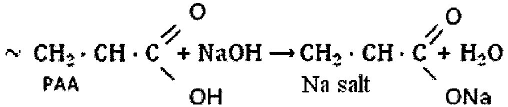

When emulsion polymerization is used, many different polymers are obtained. In HPLC studies, different sizes of polyethylenglycol acrylates, polyethylenglycol ethers and crown ethers and unreacted monomers can be discovered.

Darkening in light refers to the fact that the mixture still contains unreacted double bonds in the polymers and monomers.

The attachment of acrylic acid copolymers to mineral particles takes place when the anionic carboxylate of the polyacrylate influences the positive groups of the minerals, whereby an insoluble soap is formed. On an average, the polymer chain contains one anionic group per each linked monomer, which may mean that within the range of one nanometre, the base polymer comprises about ten anionic carboxylate groups ready to attach to the surface of any particle of the dry composition. The attachment takes place the easiest to the calcium of the crystalline calcium carbonate and the iron that exists as an impurity, the metakaolin cinter and aluminium of the hydraulic binder. Soluble calcium, iron and aluminium ions also precipitate the polyacrylate as insoluble soaps, which have a lubricating effect.

When dried, the copolymers that are suitable for the invention form a film soluble in water, when the drying temperature is below 100 °C, preferably about 50 °C, and a film insoluble in water, when the drying temperature is above 100 °C, preferably about 110 °C.

When combining the polymer and a carrier (calcium carbonate), a multiple effect is obtained. The combination works as a plasticizer, controller of the movement of water, and an adhesive film soluble in water.

The polymer as such is a combination, wherein the base polymer defines the length of the copolymer, and the other monomers complement the different coverage areas of the base polymer. The carrier, in turn, increases the coverage area of the polymers and functions as an independent strengthener of the binder hydrate.

### End product

The dry composition according to the invention contains all the dry ingredients needed for the manufacture of concrete or mortar in a well-mixed form, whereby merely adding water and mixing the composition conventionally converts the composition into a homogeneous concrete or mortar that is strong and wherein the number of errors (such as cracks and irregularities) are minimized. The number of manufacturing stages is thus also minimized, when the product in its entirety is produced by the manufacturer, where the curing is also mainly ensured.

The dry composition preferably contains dry aggregate particles, on the surfaces of which there are nanoparticles of calcium carbonate (CaCO₃), hydraulic binder and granules; the granules, in turn, possibly containing an adhesive and inert or pozzolanic core particles, which are coated with the hydraulic binder, the granules being glued to the aggregate particles (and the hydraulic binder) with the said adhesive.

### Examples

### Example 1 - Use of the mixture of copolymer and carrier

The use of copolymer that was based on acrylic acid together with a carrier as a plasticizer was successfully tested by mixing together, as aqueous slurries of 20%, 92.5 weight-% of the nanoparticles of calcium carbonate and 7.5 weight-% of the polymer mixture. Plasticizing of concrete was sufficient on a small dosage, 800 g per m³ of concrete.

Tests were also conducted on a plasticizer that was dried at a low temperature (t = 50 °C), whereby the plasticizing effect on concrete was effective enough after redissolution. The temperature is not adequate to cause a further polymerization reaction in the mixture, whereby the mixture maintains its solubility in water.

The mixture of polymer and CaCO₃ thus obtained was subjected to gluing tests by heating it in an oven at 110 °C. After the water had evaporated, a dense film insoluble in water was then formed, effectively gluing the particles together. The film was completely clear, referring to the fact that under the effect of heating, the unsaturated components of the polymer mixture reacted with each other and a final reaction took place, cross-linking the linear base polymers into a larger molecule.

The properties of the mixture of polymer and carrier (particularly its solubility in water) were studied by means of these two tests:

### Test 1.

CaCO₃ + copolymer were dried into a film, so that the temperature of the combination did not exceed 50 °C. Dissolving of the film, 95%, took place during 5 minutes at a temperature of 20 °C, the rest during 10 minutes. No measurable difference caused by the drying could be perceived when plasticizing.

### Test 2.

CaCO₃ + copolymer were dried into a film, so that the temperature of the combination increased 110 °C. The film did not dissolve in water.

### Example 2 - Manufacture of dry composition

Dry test compositions were prepared as follows:
1. DA was washed;
2. CaCO₃ + copolymer were added, 30%;
3. dry powder of the granule was added; and
4. drying was carried out in fluid form, so that the temperature of the product did not exceed 50 °C.

The dry compositions were mixed into concrete for a concrete test, wherein the same ratios between components were used as in the following experimental compositions. The compression strength (after 6 h at 50 °C, with a test cylinder of ∅ 70 mm, h = 70 mm) and spreading (at the Hagelman table) were measured.

Experimental compositions were prepared (Tests 1-4), the amounts used being exemplary. The mutual ratios of the ingredients used in these experimental compositions were stated as working particularly well in the invention, however.

### Test 1

| | | Concrete per m³ |
|---|---|---|
| Dry aggregate (DA) | | 1980 kg |
| | | |

| Granule | | |
|---|---|---|
| MKS | 60 kg | |
| OPC<2 µm | 50 kg | |
| OPC > 2 µm | 200 kg → | 310 kg |
| | | |
| CaCO₃ + copolymer | | 11 kg |
| | Total | 2301 kg |

In the concrete test, the measured compression strength of this composition was 30 MPa and the spreading 180 mm.

### Test 2.

| 1. Granule | | |
|---|---|---|
| | | Concrete per m³ |
| MKS | | 60 kg |
| OPC < 2 µm | | 50 kg |
| OPC > 2 µm | | 200 kg |
| | | 310 kg |
| | | |

| 2. Paste | | |
|---|---|---|
| Granule | | 310 kg |
| CaCO₃ + copolymer | | 11 kg |
| Water: | | |
| w/c 0.4 ^{a} | 100 kg | |
| Pozzolan ^{b} | 10 kg | |
| Absorption water ^{c} | 60 kg → | 170 kg |
| | | 491 kg |

a: w/c 0.4 is hydration water for the hydraulic binder, and the marking w/c used refers to the w/c ratio (= water-binder ratio), the target value of which is about 0.4.
b: Pozzolan water is the water needed for the pozzolanic reaction.
c: Absorption water, in turn, is needed for the water absorption of MKS.

In the concrete test, the measured compression strength of this composition was 26 MPa and the spreading 152 mm.

### Test 3.

Agglomerated, calcined MKS + CaO and/or Na₂O were prepared:
1. These slurries into the spray drier:

| | | | | | |
|---|---|---|---|---|---|
| 1. | Kaolin | 1000 kg | 2. | Kaolin | 1000 kg |
| | CaCO₃n | 100 kg | | CaCO₃n | 20 kg |
| | Copolymer | 20 kg | | Copolymer | 2 kg |
| | Water | 1100 kg | | NaOH | 20 kg |
| | | | | Water | 1000 kg |

The intermediate products obtained were kaolin agglomerates of 10 - 100 µm (20 - 40 µm).
2. Calcination:
The intermediate products were heat-treated in a fluid (at 1000 °C), whereby strong sinters were obtained (metakaolin-% (MK-%) of 20 - 40).

| Product 1 | | Product 2 | |
|---|---|---|---|
| MKS | ~ 1000kg | MKS | ~ 1000 kg |
| MK | ~ 200 - 400 kg | MK | ~ 20 kg |
| CaO | ~ 50 kg | Na₂O | ~ 16 kg |

Products 1 and 2 are example products. For example, the amounts of CaCO₃ and NaOH may vary, where necessary.

### Test 4.

Products were prepared, containing the copolymer according to the invention:
1. CaCO₃ₙ ∅ 100 - 300 nm (Fe content 10%)
2. The molecular weight of copolymer is 400, the degree of polymerization 55.

The polymers were observed to increase the repulsion field by ~50 nm outward from the surface of the particle.

## Claims

1. A dry matter composition of concrete or mortar, containing core particles, to the surfaces of which particles of a hydraulic binder are attached, **characterized in that** the composition also contains separate particles of a hydraulic binder, and **in that** the core particles consist of an inert or pozzolanic material and form, together with the hydraulic binder attached thereto, porous granules, which granules in turn are attached to the surface of a dry aggregate.

2. The composition of Claim 1, wherein the core particles contain metakaolin.

3. The composition of Claim 1 or 2, wherein the dry aggregate is limestone or other stone or synthetic aggregate or a mixture thereof, the aggregate preferably having a particle size of 0.1 - 16 mm, more preferably 0.3 - 6 mm.

4. The composition of any of Claims 1 - 3, wherein the porous structure of the granules contains calcium oxide (CaO), which was left over in the manufacture, in an amount of 2 - 20% of the total weight of the granule, preferably 8 - 15%.

5. The composition of any of Claims 1 - 4, wherein the porous structure of the granules contains sodium oxide (Na₂O), which was left over in the manufacture, in an amount of 0.5 - 5%, preferably 1 - 2%.

6. The composition of any of Claims 1 - 5, wherein the particles of the hydraulic binder are attached to the core particles by means of a film formed by a copolymer.

7. The composition of any of Claims 1 - 5, wherein the granules are attached to the surface of the dry aggregate by means of a film formed by a copolymer.

8. The composition of Claim 6 or 7, wherein the copolymer is formed using a base polymer, which is a linear, multivalent polycarboxylic acid, the molecular weight of which is preferably 2000 - 4000 g/mol, most suitably about 4000 g/mol, whereby its degree of polymerization is 55.

9. The composition of any of Claims 6 - 8, wherein the copolymer is formed using polyethylenglycol and polymerized maleic acid.

10. The composition of any of Claims 6 - 9, wherein, in drying, the copolymers form a film soluble in water, when the drying temperature is below 100°C, preferably about 50°C.

11. The composition of any of Claims 6 - 10, wherein, in drying, the copolymers form a film insoluble in water, when the drying temperature is above 100 °C, preferably about 110 °C.

12. The composition of any of Claims 6 - 11, wherein the copolymer is used together with a carrier, which is calcium carbonate (CaCO₃), preferably with a particle size of 50 - 1000 nm.

13. The composition of Claim 12, wherein the CaCO₃ carrier contains 1 - 15%, preferably 10%, of metallic impurities.

14. Concrete or mortar, **characterized in** containing the dry matter composition of any of Claims 1 - 13, mixed into water.

## Patentansprüche

1. Eine Trockensubstanzzusammensetzung von Beton oder Mörtel, enthaltend Kernteilchen, auf deren Oberflächen Teilchen eines hydraulischen Bindemittels angebracht sind, **dadurch gekennzeichnet, dass** die Zusammensetzung ferner einzelne Teilchen eines hydraulischen Bindemittels enthält und dass die Kernteilchen aus einem inerten oder puzzolanischen Material bestehen und zusammen mit dem daran angebrachten hydraulischen Bindemittel poröse Granulate bilden, wobei die Granulate ihrerseits wieder auf der Oberfläche eines Trockenzuschlagstoffs angebracht sind.

2. Die Zusammensetzung nach Anspruch 1, wobei die Kernteilchen Metakaolin enthalten.

3. Die Zusammensetzung nach Anspruch 1 oder 2, wobei der Trockenzuschlagstoff Kalkstein oder anderes Gestein oder künstlicher Zuschlagstoff oder ein Gemisch davon ist, wobei der Zuschlagstoff vorzugsweise eine Teilchengröße von 0,1 - 16 mm, stärker bevorzugt 0,3 - 6 mm, aufweist.

4. Die Zusammensetzung nach einem der Ansprüche 1 - 3, wobei die poröse Struktur der Granulate Calciumoxid (CaO), das bei der Herstellung übrig gelassen wurde, in einer Menge von 2 - 20 % des Gesamtgewichts des Granulats, vorzugsweise 8 - 15 %, enthält.

5. Die Zusammensetzung nach einem der Ansprüche 1 - 4, wobei die poröse Struktur der Granulate Natriumoxid (Na₂O), das bei der Herstellung übrig gelassen wurde, in einer Menge von 0,5 - 5 %, bevorzugt 1 - 2 %, enthält.

6. Die Zusammensetzung nach einem der Ansprüche 1 - 5, wobei die Teilchen des hydraulischen Bindemittels mittels eines Films, der von einem Copolymer gebildet wird, auf den Kernteilchen angebracht sind.

7. Die Zusammensetzung nach einem der Ansprüche 1 - 5, wobei die Granulate mittels eines Films, der von einem Copolymer gebildet wird, auf der Oberfläche des Trockenzuschlagstoffs angebracht sind.

8. Die Zusammensetzung nach Anspruch 6 oder 7, wobei das Copolymer unter Verwendung eines Basispolymers, das eine lineare, mehrwertige Polycarbonsäure ist, dessen Molekulargewicht vorzugsweise 2000 - 4000 g/mol, am geeignetsten etwa 4000 g/mol, beträgt, wodurch dessen Polymerisationsgrad 55 beträgt, gebildet wird.

9. Die Zusammensetzung nach einem der Ansprüche 6 - 8, wobei das Copolymer unter Verwendung von Polyethylenglycol und polymerisierter Maleinsäure gebildet wird.

10. Die Zusammensetzung nach einem der Ansprüche 6 - 9, wobei die Copolymere beim Trocknen einen in Wasser löslichen Film bilden, wenn die Trocknungstemperatur unter 100 °C, vorzugsweise bei etwa 50 °C, liegt.

11. Die Zusammensetzung nach einem der Ansprüche 6 - 10, wobei die Copolymere beim Trocknen einen in Wasser unlöslichen Film bilden, wenn die Trocknungstemperatur oberhalb von 100 °C, vorzugsweise bei etwa 110 °C, liegt.

12. Die Zusammensetzung nach einem der Ansprüche 6 - 11, wobei das Copolymer zusammen mit einem Träger, der Calciumcarbonat (CaCO₃), vorzugsweise mit einer Teilchengröße von 50 - 1000 nm, ist, verwendet wird.

13. Die Zusammensetzung nach Anspruch 12, wobei der CaCO₃-Träger 1 bis 15 %, vorzugsweise 10 %, metallische Verunreinigungen enthält.

14. Beton oder Mörtel, **dadurch gekennzeichnet, dass** die Trockensubstanzzusammensetzung nach einem der Ansprüche 1 - 13 in Wasser gemischt enthalten ist.

## Revendications

1. Composition de béton ou de mortier à base de matières sèches, contenant des particules coeur, à la surface desquelles des particules de liant hydraulique sont fixées, **caractérisée en ce que** la composition contient également des particules séparées de liant hydraulique, et **en ce que** les particules coeur sont constituées d'un matériau inerte ou pouzzolanique et forment, avec le liant hydraulique fixé à leur surface, des granulés poreux, lesdits granulés poreux étant à leur tour fixés à la surface d'un agrégat sec.

2. Composition selon la revendication 1, dans laquelle les particules coeur contiennent un métakaolin.

3. Composition selon la revendication 1 ou 2, dans laquelle l'agrégat sec est un agrégat calcaire ou autre agrégat pierreux ou synthétique ou un mélange de ceux-ci, l'agrégat ayant de préférence une taille de particule de 0,1 à 16 mm, plus préférablement de 0,3 à 6 mm.

4. Composition selon l'une quelconque des revendications 1 à 3, dans laquelle la structure poreuse des granulés contient de l'oxyde de calcium (CaO), qui a subsisté lors de la production, en une quantité de 2 à 20 % du poids total du granulé, de préférence de 8 à 15 %.

5. Composition selon l'une quelconque des revendications 1 à 4, dans laquelle la structure poreuse des granulés contient de l'oxyde de sodium (Na₂O), qui a subsisté lors de la production, en une quantité de 0,5 à 5 %, de préférence de 1 à 2 %.

6. Composition selon l'une quelconque des revendications 1 à 5, dans laquelle les particules du liant hydraulique sont fixées aux particules coeur au moyen d'un film formé par un copolymère.

7. Composition selon l'une quelconque des revendications 1 à 5, dans laquelle les granulés sont fixés à la surface de l'agrégat sec au moyen d'un film formé par un copolymère.

8. Composition selon la revendication 6 ou 7, dans laquelle le copolymère est formé à l'aide d'un polymère de base, qui est un acide polycarboxylique linéaire, multivalent, dont le poids moléculaire est de préférence de 2000 à 4000 g/mol, dans l'idéal d'environ 4000 g/mol, de façon que son degré de polymérisation soit de 55.

9. Composition selon l'une quelconque des revendications 6 à 8, dans laquelle le copolymère est formé à l'aide de polyéthylène glycol et d'acide maléique polymérisé.

10. Composition selon l'une quelconque des revendications 6 à 9, dans laquelle, lors du séchage, les copolymères forment un film soluble dans l'eau, quand la température de séchage est inférieure à 100 °C, de préférence d'environ 50 °C.

11. Composition selon l'une quelconque des revendications 6 à 10, dans laquelle, lors du séchage, les copolymères forment un film insoluble dans l'eau, quand la température de séchage est supérieure à 100 °C, de préférence d'environ 110 °C.

12. Composition selon l'une quelconque des revendications 6 à 11, dans laquelle le copolymère est utilisé avec un support, qui est un carbonate de calcium (CaCO₃), ayant de préférence une taille de particule de 50 à 1000 nm.

13. Composition selon la revendication 12, dans laquelle le support en CaCO₃ contient de 1 à 15 %, de préférence 10 %, d'impuretés métalliques.

14. Béton ou mortier, **caractérisé en ce qu'**il contient la composition de matières sèches selon l'une quelconque des revendications 1 à 13, mélangée à de l'eau.
